# EUROPEAN PATENT SPECIFICATION

(11) **EP 4 399 794 B1**
(45) Date of publication and mention of the grant of the patent: **11.06.2025**
(21) Application number: 22786122.6
(22) Date of filing: 21.09.2022
(51) Int. Cl.: H02S 10/12, H02S 20/24, H02S 40/10, H02S 40/42, F03D 3/04, F03D 9/00

(54) **DEVICE FOR GENERATING RENEWABLE ENERGY**
VORRICHTUNG ZUR ERZEUGUNG ERNEUERBARER ENERGIE
DISPOSITIF DE PRODUCTION D'ÉNERGIE RENOUVELABLE

(43) Date of publication of application: 17.07.2024
(73) Proprietor: Ibis Power Holding B.V., 5617 AB Eindhoven (NL)
(72) Inventor: SUMA, Alexander Boudewijn, 5617AB Eindhoven (NL)
(74) Representative: EP&C
(86) International application number: PCT/NL2022/050528
(87) International publication number: WO 2023/068922

(56) References cited:
- WO-A1-2016/015450
- WO-A1-2020/027659
- WO-A1-2020/250261
- CN-A- 108 612 183
- CN-A- 110 761 546
- CN-U- 210 433 392
- US-B1- 10 280 900

## Description

The present invention relates to a device for generating renewable energy, in particular a device of that kind for integration on a rooftop of a building, as well as a building provided with such device.

Devices of this type are known in the art and have been proposed by the applicant in various forms. Amongst those are the ones described in the international patent application PCT/NL/2017/00359 and PCT/NL/2019/050506, which have appeared to have an excellent performance, and which have an ever-growing commercial success.

Limitations to apply the invention therefore do not lie in the properties of the proposed system, but in limitations imposed by the environment, in particular the buildings to which the invention is to be applied.

One of the limitations is that rooftops may already have functional applications and/or devices, that occupy a part of their surface. Some of these items may allow to be covered or in particular to have an array of solar panels on top of them. Others don't and among the latter ones are maintenance devices for the building walls, especially (window) cleaning apparatus. These apparatuses usually comprise a gondola type of carrier for personnel, which needs to be movable along the wall surface. For that purpose, these systems comprise a system that extends along the edges of the roof and allows the gondola to be moved. In general, a cabinet with control and additional technical devices for lifting the gondola occupies a central part of the roof, impeding placement of a device for generating renewable energy of the type according to the above cited prior art.

A device according to the preamble of claim 1 is known from WO-2020/027659.It is a goal of the present invention to take away the above-mentioned disadvantages, or at least to provide a useful alternative to the prior art.

The invention thereto proposes a device for generating renewable energy, comprising a carrying structure for positioning a surface with solar panels at a distance from a support, in particular the roof of a building, an air duct, defined in height direction by the support and the surface, wherein the surface area protrudes at least partially and preferably completely beyond the support area and the carrying structure comprises a displacement system for a mover for a maintenance device, such as a gondola, which displacement system is designed for displacing the mover at least partly along that part of the surface that projects outside the support. The displacement system may normally be arranged at a bottom side of the surface with solar panels.

More in particular the device according to the invention may - combined or not with other features mentioned in this application - comprise an electric power system for converting wind energy into electric energy, comprising a duct for air, the duct comprising a floor, a first and a second wall, a roof, and the duct further defining an air inflow direction towards a turbine, the turbine having a diameter, and being located adjacent to or at least partially in the duct; and defining together with the duct an air outflow direction, wherein an area free of pressure or turbulence increasing obstructing elements, extending in the resultant air outflow direction of the turbine over a length of at least one, and preferably more than two times the turbine diameter, measured from the centre of rotation of the turbine.

The floor and the roof may in a practical embodiment for instance be oriented essentially perpendicular to the walls, so that a tube with an essentially square cross section is obtained, but multiple shapes and configurations are thinkable.

The turbine may be any type of turbine, both with wicks extending parallel to its axis of rotation, which may be vertical or horizontal. In such cases, the axis of rotation is also the centre of rotation. The turbine may also have wicks extending from its axis of rotation, which in that case will be horizontal. In this (propeller type) case the origin at the axis of rotation from where the wicks extend will be the centre of rotation.

The duct may have a throughput area that decreases downstream, for converging and thus focussing the air flow, causing a higher speed inside the duct, which is beneficial for the power transfer to the turbine. However, after the turbine, for an optimal air flow, that is an air outflow that as a whole encounters the least resistance, it is important that, no more pressure increase takes place.

For that reason, an area free of pressure increasing obstructing elements, extending in the air outflow direction of the turbine over a length of at least one, and preferably more than two times the turbine diameter, and mostly preferred over a length of about three times the turbine diameter measured from the centre of rotation of the turbine may be provided. It has been determined by the applicant, that an area free of pressure increasing obstructing elements extending more than three times the turbine diameter does not improve the performance anymore.

Pressure increasing obstructing elements are to be understood as elements that cause at least a locally increased pressure, for instance because they impede a free air flow, or because they form a course of turbulence.

In many state of the art solutions, in particular those with turbines with vertical axis of rotation, walls are present around the turbine. Although they are generally considered as beneficial for creating a duct for every direction of incoming wind, when optimising for just one direction, according to the present invention they are found to have disadvantages.

In a further embodiment, the system according to the invention comprises a pressure decreasing element, such as a diffuser, arranged in the area free of pressure increasing obstructing elements. Such diffuser generally consists of sharp edged rounded blades (for instance having an almond or canoe shaped cross section), diverging an air flow without obstructing it. The beneficial effect of such diffuser is that it causes a (local) pressure decrease, which contributes to the desired optimal air flow.

In practice, the floor and the roof are oriented essentially horizontal in use, and the walls are oriented essentially vertical in use. A housing may be formed, being adapted for placement on the roof of a building. Said housing, and in particular the floor and the roof may be essentially rectangular, and in a particular embodiment square. In a preferred embodiment, the floor has a rectangular shape, with measurements of about 6 x 3 meters, wherein the axis of rotation of the turbine is oriented in the middle of one of the long sides.

The walls may be straight panels, put it is also thinkable that at least one of the walls is curved or folded, in order to reduce turbulence.

The combination of the floor, roof and walls forming the duct and the placement of the turbine with respect to the duct lead to a concentration of wind toward the turbine and as a result to an increased wind velocity through a venturi effect and increased power generation.

In a further embodiment, the walls extend under a respective first angle and second angle with respect to a line connecting their starting points, wherein the first angle lies between 45 and 90 degrees, and wherein the second angle lies between 25 and 65 degrees. This way the system according to the invention can be optimized for different dominant wind directions before it is actually mounted at site.

A duct can be thus formed that leads the wind towards one side of the turbine, while the other is - at least for wind coming from the same direction - covered by one of the walls. In a turbine with a vertical axis, it is important to concentrate the wind to one site in which the blades of the turbine are oriented such that they catch the maximum amount of wind, while in the other orientation, when they should move against the wind, they are covered as much as possible.

It has appeared, that optimal results are obtained when the first angle and the second angle are together 90 degrees.

In a further embodiment, the side of the floor facing the roof is inclined, going upward from its edge inwardly, over a distance smaller than the distance from the edge to the turbine.

An advantage of this feature is that it reduces turbulence at the roof edge so that the air flow is more steady at the turbine, because a smoother entrance to the system is created, decreasing turbulence and leading to a more stable operation of the system, in particular when the system according to the invention is applied on the roof of a (high) building, whereby part of the wind or air is deflected by the building facade and thus obtains a directional component upwardly.

The turbulence reducing effect can be further increased when also the side of the roof facing the floor is inclined, going downward from its edge inwardly, over a distance smaller than the distance from the edge to the turbine. In particular, the angle under which the roof is inclined toward the floor may be between 15 and 20 degrees.

The system according to the invention may further comprise at least one louver, extending between the first and the second wall, and inclined upwardly in a direction toward the turbine. The louver may for example be under an angle between 5 and 30 degrees with the horizontal.

Such louver also contributes to a more homogeneous direction of the incoming air directing on turbine. In a practical embodiment, the system according to the invention comprises two louvers, wherein a first louver, arranged above the floor, is inclined at an angle between 20 and 30 degrees, and a second louver, arranged between the fist louver and the roof, is inclined at an angle between 5 and 15 degrees.

In a further aspect of the present invention, the roof extends over the floor in a direction away from the turbine.

This has the advantage of capturing air with an upward component, but also enlarges the roof surface, which may be beneficial for further purposes, for instance for placing solar panels on top of the roof of the system. The duct may in that case be configured for guiding air along the bottom side of the solar panels, for cooling the latter.

The direction from the edge of the floor to the edge of the roof may extend at an angle between 5 and 20, and in particular between 8 and 12 degrees from a direction perpendicular to the plane in which the roof or the floor lays. It has appeared that with these angles, optimum points of catching mass flow from façade are obtained.

Another aspect of the present invention is that the cross section of the duct decreases in a direction toward the turbine. Herewith, locally a higher air speed is obtained, which leads to a higher rotational speed of the turbine for a given wind force, and thus to a higher power generation. Preferably the cross section decreases between 1 and 3 times.

A further aspect of the invention comprises a deflector, arranged between the first wall and the second wall. The deflector may be movable. Herewith, instead of placing the walls in different angles, similar effect can be reached by placing a deflector before the turbine. The blade is, coming towards the edge of the building protected from the wind.

More in particular the device according to the invention may - combined or not with other features mentioned in this application - relate to a solar panel system, comprising an array of solar panels, the array essentially arranged parallel to and a distance from the plane of a substantially flat support surface, such as a roof or the sea surface, each solar panel inclined with respect to the array and thus to the flat surface, at least one air inlet, between the support surface and the array and at least one air outlet between adjacent solar panels in the array, wherein a duct for air is formed from the air inlet to the at least one air outlet, by at least two walls that extend from the support surface to the array and flank the space defined between the support surface and the array. Preferably all solar panels are equipped with an air outlet between adjacent solar panels.

By providing the solar panels at a distance from the support surface, a space is created between the solar panels and the support, through which space air is enabled to flow. The air is guided from the air inlet to the at least one air outlet, by the duct formed by the support surface, the walls, and the surfaces of the solar panels themselves. In most cases, this duct may thus have a tubular shape, with an essentially rectangular cross section in the direction of air flow. The bottom side of the solar panels may thus be uncovered, in order to allow air to flow along them directly.

The air flow itself is automatically created, by ambient air pressure and local weather conditions. In particular when the solar panel system according to the present invention is arranged on a rooftop of building that is higher than its surroundings, or for instance floating on the sea, an air flow is easily obtained. When positioning the system according to the invention on a rooftop, the air inlet may evidently be positioned toward the direction from where wind is blowing in general. The solar panel array structure may extend over the façade or wall of the hosting structure so that more wind flow is captured to be directed inward.

In a preferred embodiment, the duct may be essentially or completely closed, except for the air inlet and the at least one air outlet.

In that case, the air outlet between adjacent solar panels and the outlet between the support surface and the array are the sole outlets for air. Such configuration ensures that the entire air flow is directed toward the air outlet between adjacent solar panels, or in case its present, also partly through the air outlet between the support surface and the array.

When the solar panel system according to the invention comprises an air outlet between the support surface and the array, an airflow through the duct may be created, that may be used for generating electric power when a generator is arranged in the duct. Otherwise, the outlet may provide the advantage that the risk of airflow that becomes too high is limited, or that the airflow can even be controlled when the area of the outlet opening is variable. Such air outlet between the support surface and the array may preferably be arranged at the opposite side from air inlet.

In a further embodiment of the present invention, the air inlet may have a spoiler that directs wind toward the at least one air outlet between adjacent solar panels, or, if several outlets between adjacent panels are available, toward those several outlets. Such spoiler may for instance be inclined with respect to the support, and in particular be directed to the array of solar panels, to guide the air along the bottom surfaces of the solar panels.

In an advanced embodiment, the spoiler is movable in order to amend the angle of inclination. It may for instance be rotatable with respect to an axis of rotation, that may essentially coincide or lie in the plane of the support surface. The spoiler itself may comprise a plane, flat or curved, for deflecting the air flow. The solar panel system may further be configured for adjusting the angle the spoiler has with respect to the support surface in dependence of the speed or force of air at the air inlet. A configuration for adjusting the angle for instance comprises a spring, configured and or directed to increase the angle of inclination when no force is exerted by an incoming air flow. The stronger the air flow, the smaller the angle, so that the air is less directly forced toward the solar panels.

The solar panel system may also comprise a second spoiler at the air outlet between the support surface and the array. Such second spoiler may also be used to control the amount of mass flow or in particular the fraction of air that passes through the duct to the air outlet between the support surface and the array, and the amount or fraction that passes through the air outlets between adjacent solar panels. Solar panel system according to claim 9, wherein the second spoiler is movable between a first position wherein air flow through the outlet opening is allowed and a second position wherein air flow is prohibited in order to force air to flow out via the at least one outlet between adjacent solar panels in the array.

In embodiments where the solar panel system according to the invention comprises multiple air outlets between adjacent solar panels in the array, the area of the outlets may be chosen proportional to the distance between the air inlet and the respective air outlet, to allow an even air flow along each solar panel. Generally, the airflow follows a path that causes the least resistance, which may lead to the undesired situation that relatively more air flows along solar panels close to the air inlet than along solar panels further from the air inlet.

To avoid a too high pressure, the solar panel system according to the invention comprises an over pressure valve, which may be integrated in an air outlet between adjacent solar panels.

In a further embodiment, the solar panel system may comprise or in particular may house an air conditioning system, arranged in the shadow of the array of solar panels. Herewith the shadow provided by the solar panels is taken advantage of. An exhaust for draining heat from the air conditioning system is preferably arranged such that it does not discharge hot air in the air stream to cool the solar panels.

In yet another embodiment, the solar panel system comprises a spherical spoiler below each panel to increase the air flow. These spherical spoilers may preferably be placed beneath the centre of the solar panels, where the temperature of the panels becomes the highest, in order to guide as much wind flux along the panels for cooling them. The system may also comprise a smog filter, which may be an electric smog filter comprising at least one cathode and anode, configured to remove particles in the air flow by means of magnetic attraction. Such electric smog filter may be placed after a generator that may form part of any embodiment of the present invention. An urban or any other wind flow interacting with the hosting structure is redirected between the solar array and bottom surface where it is led through, possibly first a generator, a cathode anode smog filter array after which it release cleaner air into the environment.

Another aspect of the invention is that part of the device, in particular the support structure, louvers, deflectors and/or spoilers may be designed such that they have sound absorbing or limiting features. This may be obtained by a surface treatment, a structure or pattern by design or an additional sound dampening or absorbing layer, applied onto part of the device.

The supporting device may comprise spacers and a support structure for the solar panels insofar as they are not self-supporting. The plane may extend substantially parallel to the support, and the solar panels may each lie at an angle to the plane or in any case to the horizontal in order to make an optimal angle with respect to the sun, and can be placed in orientation are movable, in particular rotatable or pivotable. An alternative is that the surface or parts thereof are located at an angle with respect to the support and/or horizontally.

The maintenance device may be suspended from the mover by means of a suspension that is adjustable in height, such as a hoisting device or a winch. It may be provided with a power supply, both for movement of the mover and for height displacement of the maintenance device. Optionally there may also be a guide for cleaning fluids, other cleaning products, such as soap or foam, or a fire detergent medium. There may even be an additional mover for a dispensing device such as a nozzle for supplying such cleaning or fire detergent to the support, in most cases a building.

The air duct may thus comprise air guides for guiding the air along the underside of the solar panels and may in particular be provided with openings between the solar panels for discharging air.

The air duct may thus comprise at least one turbine, which is in particular rotatable about a vertical axis, wherein the air duct forms a guide for air through the turbine.

The displacement system may be configured for displacing the mover along a contour of the support. Normally, multiple, if not all sides of a building need to be reachable, so the displacement system may have a track that leads along the full contour of the support.

The maintenance device, in particular the gondola, may be suspended from at least one wire or winch, and extend further from its suspension point on a side facing the support than on the side remote from the support. This is to ensure that the building can be approached sufficiently close to allow workers to work safely. It may further be provided with a counterweight, which is arranged at the side of its suspension point remote from the support at an adjustable distance thereof, to keep it hanging straight, especially with its floor surface in a horizontal neutral position.

The mover displacement device may comprise one (mono)rail or several rails extending along a track extending at least partly along that part of the plane projecting beyond the support along which the mover is movable.

Such track may extend at least partially above the support for providing a parking position above the support. This allows workers to enter and exit the maintenance device at a safe place, i.e. above a building rooftop.

The displacement device may also comprise an electrical contact, in particular also formed by rails, for delivering power for the movement, control and / or lifting of the device.

The rails may comprise only curves having a greater radius than a smallest radius of an outer edge of the surface, and more particularly wherein the rails follow a curve directed away from the support before following a corner of the surface, on order to allow smooth movement of the maintenance device.

The device according to the invention may also comprise a transmitter for telephone or data traffic is included in the support device, in particular in an upright thereof, and more in particular in an upright positioned on the contour of the base, more specifically a 5G transmitter. This feature may also be applied without some, more or all of the other features.

The invention is now elucidated into more detail with reference to the following figures. Herein:
- Figure 1 shows a first cut-away view of a device according to the invention;
- Figure 2 shows a cross section of a device according to the invention;
- Figure 3 shows a maintenance device forming part of the invention;
- Figure 4 shows a second cut-away view of a device according to the invention;
- Figure 5 shows a first detail from figure 1; and
- Figure 6 shows a second detail from figure 1.

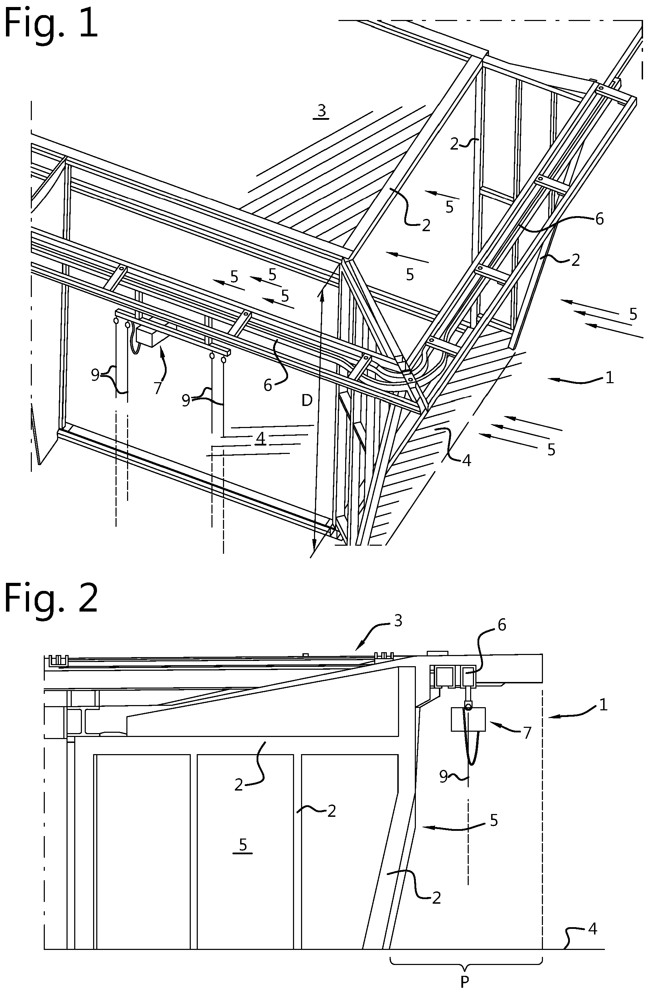

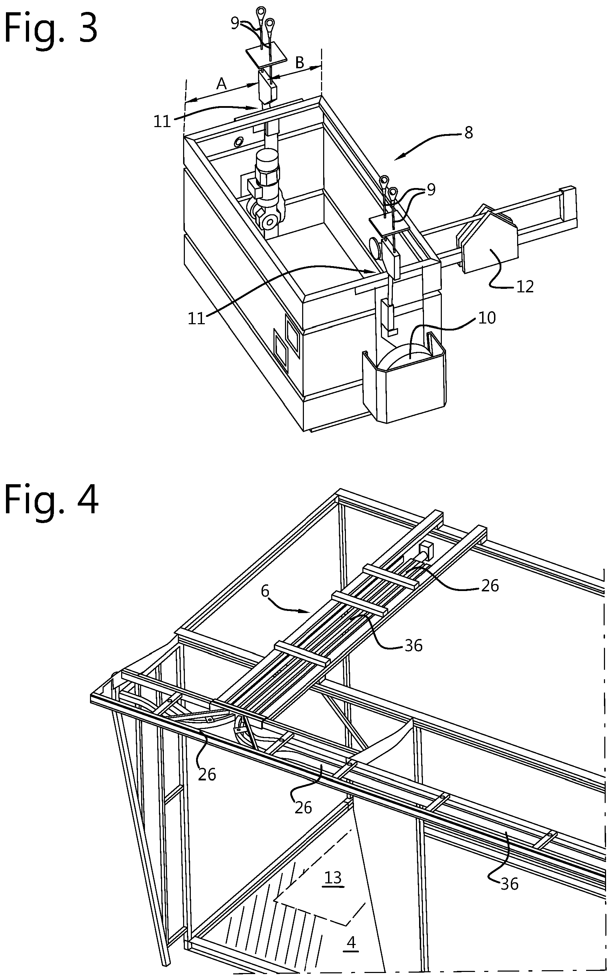

Figure 1 shows a cut-away view of a device 1 for generating renewable energy according to the present invention, comprising a carrying structure 2 for positioning a surface 3 with solar panels (not depicted, see cited prior art references from the same applicant) at a distance D from a support 4, in particular the roof of a building, an air duct 5, defined in height direction by the support 4 and the surface 3 wherein the surface area protrudes at least partially and preferably completely beyond the support area and wherein the carrying structure comprises a displacement system 6 for a mover 7 for a maintenance device (8, see figure 3) formed by a gondola, which displacement system 6 is designed for displacing the mover 7 at least partly along that part of the surface 3 that projects (a distance P) outside the support 4, see figure 2.

Figure 2 shows a side view of the device 1 from figure 1. The view especially shows how a part of the surface 3 projects (a distance P) outside the support 4. Also visible in this figure is how the displacement device is integrated in the downwardly facing side of the surface 3 for carrying solar panels (not depicted). The maintenance device (8, see figure 3) is suspended from the mover 7 by means of a suspension 9 that is adjustable in height, formed by a winch 10.

Figure 3 shows the maintenance device 8, formed by a such as the gondola, suspended from a winch 10 by cables 9, which extends further A from its suspension points 11 on a side facing the support than B on the side remote from the support. The gondola 8 is provided with a counterweight 12, which is arranged at the side of its suspension point 11 remote from the support at an adjustable distance thereof.

Figure 4 shows that the mover 7 displacement device 6 comprises one monorail 26 extending along a track 36 extending at least partly along that part of the plane projecting P beyond the support 4. The track 36 extends in this embodiment at least partially above the support 4 for providing a parking position 13 above the support 4.

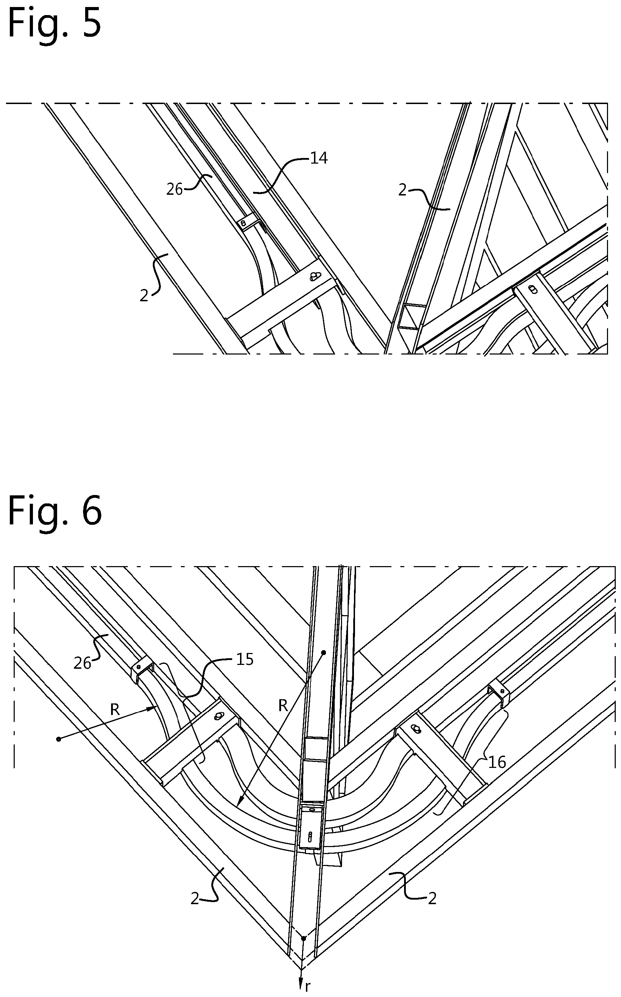

Figure 5 shows a detail wherein the displacement device 6 also comprises an electrical contact 14 also formed by rails.

Figure 6 shows a detail wherein the rails 26 comprise only curves having a greater radius R than a smallest radius r of an outer edge of the surface 3. The rails 26 follow a curve directed away 15, 16 from the support before following a corner of the surface 3.

The above embodiments are examples only and do in no way limit the scope of the invention, as defined by the following claims.

## Claims

1. Device (1) for generating renewable energy, comprising:
- a carrying structure (2) for positioning a surface (3) with solar panels at a distance (D) from a support (4), in particular the roof of a building;
- an air duct (5), defined in height direction by the support (4) and the surface (3);
wherein the surface area protrudes at least partially and preferably completely beyond the support area;
**characterised in that:**
the carrying structure (2) comprises a displacement system (6) for a mover (7) for a maintenance device (8), such as a gondola, which displacement system (6) is designed for displacing the mover (7) at least partly along that part of the surface (3) that projects outside the support (4).

2. Device (1) according to claim 1, wherein the maintenance device (8) is suspended from the mover (7) by means of a suspension (9) that is adjustable in height, such as a hoisting device or a winch (10).

3. Device (1) according to any of the preceding claims, wherein the air duct (5) comprises air guides for guiding the air along the underside of the solar panels and wherein it is in particular provided with openings between the solar panels for discharging air.

4. Device (1) according to any of the preceding claims, wherein the air duct (5) comprises at least one turbine, which is in particular rotatable about a vertical axis, wherein the air duct (5) forms a guide for air through the turbine.

5. Device (1) according to any of the preceding claims, wherein the displacement system (6) is configured for displacing the carrier about a contour of the support.

6. Device (1) according to any of the preceding claims, wherein the maintenance device (8), such as the gondola, is suspended from a wire or winch (10), and extends further from its suspension point (11) on a side facing the support (4) than on the side remote from the support (4).

7. Device (1) according to claim 6, wherein the maintenance device (8), such as the gondola, is provided with a counterweight (12), which is arranged at the side of its suspension point (11) remote from the support (4), preferably at an adjustable distance thereof.

8. Device (1) according to any of the preceding claims, wherein the mover displacement device (6) comprises one monorail or several rails (26) extending along a track (36) extending at least partly along that part of the plane projecting beyond the support (4) along which the mover (7) is movable.

9. Device (1) according to claim 8, wherein the track (36) extends at least partially above the support (4) for providing a parking position (13) above the support (4).

10. Device (1) according to claim 8 or 9, wherein the displacement device (6) also comprises an electrical contact (14), in particular also formed by rails.

11. Device (1) according to any of claims 8-10, wherein the rails (26) comprise only curves having a greater radius (R) than a smallest radius (r) of an outer edge of the surface, and more particularly wherein the rails (26) follow a curve directed away from the support (4) before following a corner of the surface.

12. Device (1) according to any of the preceding claims, wherein a transmitter for telephone or data traffic is included in the support device, in particular in an upright thereof, and more in particular in an upright positioned on the contour of the base. more specifically a 5G transmitter.

13. Device (1) according to any of the preceding claims, wherein part of the device (1), in particular the support structure, louvers, deflectors and/or spoilers are sound absorbing or limiting, in particular by a surface treatment, a structure or pattern by design or an additional sound dampening or absorbing layer, applied onto part of the device.

14. Device (1) according to any of the preceding claims, comprising a dispensing system for fluids such as water, cleaning products, such as soap or foam, or a fire detergent medium, more in particular comprising an additional mover for a dispensing device such as a nozzle for supplying such cleaning or fire detergent to the support.

15. Building, provided with a device (1) according to any of the foregoing claims.

## Patentansprüche

1. Vorrichtung (1) zur Erzeugung erneuerbarer Energie, umfassend:
- eine Tragstruktur (2) zur Positionierung einer Fläche (3) mit Solarpaneelen in einem Abstand (D) von einer Stütze (4), insbesondere dem Dach eines Gebäudes,
- einen Luftkanal (5), der in Höhenrichtung durch die Stütze (4) und die Fläche (3) definiert ist,
wobei der Flächenbereich zumindest teilweise und vorzugsweise vollständig über den Stützbereich hinausragt,
**dadurch gekennzeichnet, dass**:
die Tragstruktur (2) ein Verschiebesystem (6) für eine Bewegungsvorrichtung (7) für eine Wartungsvorrichtung (8) wie eine Gondel umfasst, wobei das Verschiebesystem (6) dazu ausgebildet ist, die Bewegungsvorrichtung (7) zumindest teilweise entlang des außerhalb der Stütze (4) vorstehenden Teils der Fläche (3) zu verschieben.

2. Vorrichtung (1) nach Anspruch 1, wobei die Wartungsvorrichtung (8) mittels einer höhenverstellbaren Aufhängung (9) wie einer Hebevorrichtung oder einer Winde (10) an der Bewegungsvorrichtung (7) aufgehängt ist.

3. Vorrichtung (1) nach einem der vorhergehenden Ansprüche, wobei der Luftkanal (5) Luftführungen zum Führen der Luft entlang der Unterseite der Solarpaneele umfasst und wobei er insbesondere mit Öffnungen zwischen den Solarpaneelen zum Abführen von Luft versehen ist.

4. Vorrichtung (1) nach einem der vorhergehenden Ansprüche, wobei der Luftkanal (5) zumindest eine Turbine umfasst, die insbesondere um eine vertikale Achse drehbar ist, wobei der Luftkanal (5) eine Führung für Luft durch die Turbine bildet.

5. Vorrichtung (1) nach einem der vorhergehenden Ansprüche, wobei das Verschiebesystem (6) zum Verschieben des Trägers um eine Kontur der Stütze ausgestaltet ist.

6. Vorrichtung (1) nach einem der vorhergehenden Ansprüche, wobei die Wartungsvorrichtung (8) wie die Gondel an einem Draht oder einer Winde (10) aufgehängt ist und sich an einer der Stütze (4) zugewandten Seite weiter von ihrem Aufhängepunkt (11) erstreckt als auf der der Stütze (4) abgewandten Seite.

7. Vorrichtung (1) nach Anspruch 6, wobei die Wartungsvorrichtung (8) wie die Gondel mit einem Gegengewicht (12) versehen ist, das an der der Stütze (4) abgewandten Seite seines Aufhängepunkts (11) vorzugsweise in einem verstellbaren Abstand davon angeordnet ist.

8. Vorrichtung (1) nach einem der vorhergehenden Ansprüche, wobei die Bewegungsvorrichtungsverschiebesystem (6) eine Einzelschiene oder mehrere Schienen (26) umfasst, die sich entlang einer Spur (36) erstrecken, die sich zumindest teilweise entlang jenes Teils der Ebene erstreckt, der über die Stütze (4) hinausragt, entlang dessen die Bewegungsvorrichtung (7) beweglich ist.

9. Vorrichtung (1) nach Anspruch 8, wobei sich die Spur (36) zumindest teilweise über der Stütze (4) erstreckt, um eine Parkposition (13) über der Stütze (4) bereitzustellen.

10. Vorrichtung (1) nach Anspruch 8 oder 9, wobei die Verschiebesystem (6) auch einen elektrischen Kontakt (14) umfasst, der insbesondere ebenfalls durch Schienen gebildet ist.

11. Vorrichtung (1) nach einem der Ansprüche 8 - 10, wobei die Schienen (26) nur Krümmungen umfassen, die einen Radius (R) aufweisen, der größer als ein kleinster Radius (r) eines äußeren Rands der Fläche ist, und insbesondere wobei die Schienen (26) einer von der Stütze (4) weg gerichteten Krümmung folgen, bevor sie einer Ecke der Fläche folgen.

12. Vorrichtung (1) nach einem der vorhergehenden Ansprüche, wobei ein Sender für Telefon- oder Datenverkehr, insbesondere ein 5G-Sender, in der Stützvorrichtung, insbesondere in einem Ständer davon und insbesondere in einem auf der Kontur der Basis positionierten Ständer enthalten ist.

13. Vorrichtung (1) nach einem der vorhergehenden Ansprüche, wobei ein Teil der Vorrichtung (1), insbesondere die Stützstruktur, Lamellen, Deflektoren und/oder Spoiler, schallabsorbierend oder -begrenzend sind, insbesondere durch eine Oberflächenbehandlung, eine Struktur oder ein Muster durch Design oder eine zusätzliche schalldämpfende oder -absorbierende Schicht, die auf einem Teil der Vorrichtung aufgebracht ist.

14. Vorrichtung (1) nach einem der vorhergehenden Ansprüche, umfassend ein Abgabesystem für Fluide wie Wasser, Reinigungsmittel wie Seife oder Schaum, oder ein Feuerwaschmittel, insbesondere umfassend eine zusätzliche Bewegungsvorrichtung für eine Abgabevorrichtung wie eine Düse zum Zuführen eines solchen Reinigungs- oder Feuerwaschmittels zu der Stütze.

15. Gebäude, das mit einer Vorrichtung (1) nach einem der vorhergehenden Ansprüche versehen ist.

## Revendications

1. Dispositif (1) de production d'énergie renouvelable, comprenant :
- une structure porteuse (2) destinée à positionner une surface (3) pourvue de panneaux solaires à une certaine distance (D) d'un support (4), en particulier le toit d'un bâtiment ;
- un conduit d'air (5), défini en hauteur par le support (4) et la surface (3) ;
la zone de surface faisant saillie au moins partiellement et de préférence complètement de la zone de support ;
**caractérisé en ce que** :
la structure porteuse (2) comprend un système de déplacement (6) pour un dispositif de déplacement (7) destiné à un dispositif de maintenance (8), tel qu'une nacelle, lequel système de déplacement (6) est conçu pour déplacer le dispositif de déplacement (7) au moins en partie le long de la partie de la surface (3) qui fait saillie à l'extérieur du support (4).

2. Dispositif (1) selon la revendication 1, le dispositif de maintenance (8) étant suspendu au dispositif de déplacement (7) au moyen d'une suspension (9) réglable en hauteur, telle qu'un dispositif de levage ou un treuil (10).

3. Dispositif (1) selon l'une quelconque des revendications précédentes, le conduit d'air (5) comprenant des guides d'air pour guider l'air le long de la face inférieure des panneaux solaires et étant notamment pourvu d'ouvertures entre les panneaux solaires pour évacuer l'air.

4. Dispositif (1) selon l'une quelconque des revendications précédentes, le conduit d'air (5) comprenant au moins une turbine, qui est en particulier rotative autour d'un axe vertical, le conduit d'air (5) formant un guide pour l'air à travers la turbine.

5. Dispositif (1) selon l'une quelconque des revendications précédentes, le système de déplacement (6) étant conçu pour déplacer le dispositif porteur autour d'un contour du support.

6. Dispositif (1) selon l'une quelconque des revendications précédentes, le dispositif de maintenance (8), tel que la nacelle, étant suspendu à un câble ou à un treuil (10), et s'étendant plus loin de son point de suspension (11) sur un côté faisant face au support (4) que sur le côté à distance du support (4).

7. Dispositif (1) selon la revendication 6, le dispositif de maintenance (8), tel que la nacelle, étant pourvu d'un contrepoids (12), qui est disposé du côté de son point de suspension (11) éloigné du support (4), de préférence à une distance réglable de celui-ci.

8. Dispositif (1) selon l'une quelconque des revendications précédentes, le système de déplacement (6) de dispositif de déplacement comprenant un monorail ou plusieurs rails (26) s'étendant le long d'une voie (36) s'étendant au moins en partie le long de la partie du plan faisant saillie au-delà du support (4) le long duquel le dispositif de déplacement (7) est mobile.

9. Dispositif (1) selon la revendication 8, la voie (36) s'étendant au moins en partie au-dessus du support (4) pour fournir une position de stationnement (13) au-dessus du support (4).

10. Dispositif (1) selon la revendication 8 ou 9, le système de déplacement (6) comprenant également un contact électrique (14), notamment formé par des rails.

11. Dispositif (1) selon l'une quelconque des revendications 8-10, les rails (26) ne comprenant que des courbes ayant un rayon (R) supérieur au plus petit rayon (r) d'un bord extérieur de la surface, et plus particulièrement les rails (26) suivant une courbe dirigée à l'opposé du support (4) avant de suivre un coin de la surface.

12. Dispositif (1) selon l'une quelconque des revendications précédentes, un émetteur pour le trafic téléphonique ou de données étant inclus dans le dispositif de support, en particulier dans un de ses montants, et plus particulièrement dans un montant positionné sur le contour de la base, plus spécifiquement un émetteur 5G.

13. Dispositif (1) selon l'une quelconque des revendications précédentes, une partie du dispositif (1), en particulier la structure de support, les persiennes, les déflecteurs et/ou les ailerons absorbant ou limitant les sons, notamment par un traitement de surface, une structure ou un motif par conception ou une couche supplémentaire d'amortissement ou d'absorption des sons, appliquée sur une partie du dispositif.

14. Dispositif (1) selon l'une quelconque des revendications précédentes, comprenant un système de distribution pour des fluides tels que l'eau, des produits de nettoyage, tels que le savon ou la mousse, ou un milieu ignifuge, plus particulièrement comprenant un moteur supplémentaire pour un dispositif de distribution tel qu'une buse pour fournir un tel produit de nettoyage ou produit ignifuge au support.

15. Bâtiment équipé d'un dispositif (1) selon l'une quelconque des revendications précédentes.
